# EUROPÄISCHE PATENTANMELDUNG

(11) **EP 4 850 807 A1**
(43) Veröffentlichungstag der Anmeldung: **09.12.2026**
(21) Anmeldenummer: 26183209.1
(22) Anmeldetag: 05.06.2026
(51) Int. Cl.: B01J 20/20, B01D 53/02, B01J 20/28, B01J 20/30, B01J 20/32

(54) **KOHLENSTOFF-BASIERTES SORPTIONSMATERIAL FÜR DIE ABSCHEIDUNG VON CO2 AUS LUFT**

(30) Priorität: 06.06.2025 DE 102025122454
(71) Anmelder: Volkswagen Aktiengesellschaft, 38440 Wolfsburg (DE)
(72) Erfinder: Fricke, Johanna, 38440 Wolfsburg (DE); Schütz, Christine, 38440 Wolfsburg (DE); Rüggeberg, Marc, 38440 Wolfsburg (DE); Yuan, Jiayin, 16972 Solna (SE)
(74) Vertreter: Gulde & Partner

(57) **Zusammenfassung**

Die Erfindung betrifft ein Sorptionsmaterial auf Basis eines Kohlenstoffmaterials ausgewählt aus Aktivkohle oder Graphit sowie mindestens einer weiteren Komponente, die ein kohlenstoffbasiertes Nanomaterial und/oder ein Bindemittel umfasst. Das Bindemittel enthält mindestens ein Alginat. Das Sorptionsmaterial weist eine Funktionalisierung mit primären oder sekundären Amino-Gruppen auf. Das Sorptionsmaterial eignet sich als Sorptionselement in Adsorptionsprozessen, insbesondere zur Abtrennung von Kohlenstoffdioxid aus der Umgebungsluft.

## Beschreibung

Die Erfindung betrifft ein Sorptionsmaterial auf Basis eines Kohlenstoffmaterials und einer Amino-Gruppen-Funktionalisierung sowie ein Verfahren zu dessen Herstellung sowie die Verwendung des Sorptionsmaterials als Sorptionselement in Adsorptionsprozessen, insbesondere zur Abtrennung von Kohlenstoffdioxid aus der Umgebungsluft.

Zur Reduzierung der Kohlenstoffdioxidemissionen in der Umgebungsluft und zur Erreichung der Klimaneutralität müssen nicht nur die Kohlenstoffdioxidemissionen verringert werden, sondern auch nicht vermeidbare Kohlenstoffdioxidemissionen entsprechend kompensiert werden. Eine Möglichkeit, diese Kohlenstoffdioxidemissionen zu kompensieren stellt ein Abscheiden von Kohlenstoffdioxid aus der Umgebungsluft dar. Ein solches Verfahren wird auch als Direct-Air Capture-Verfahren (DAC-Verfahren) bezeichnet und ist geeignet, den Anteil an Kohlenstoffdioxid in der Atmosphäre zu reduzieren. Das Grundprinzip des DAC-Verfahrens ist, dass Umgebungsluft durch einen Filter strömt, der einen Teil des CO₂ entzieht. Ergebnis des Verfahrens ist reines oder hochkonzentriertes CO₂, das anschließend für verschiedene Zwecke verwendet werden kann. Nutzungsmöglichkeiten des CO₂ sind die stoffliche Nutzung als Rohstoff, zum Beispiel für die Chemieindustrie, die Herstellung CO₂-neutraler Brennstoffe (EE-Gas und E-Fuels) sowie die geologische Speicherung des Kohlendioxids, wodurch sich negative Emissionen erzielen lassen. Letzteres wird als Direct-Air-Carbon-Capture-and-Storage (DACCS) bezeichnet und soll dazu dienen, der Atmosphäre aktiv Kohlendioxid zu entziehen und dauerhaft per CO₂-Abscheidung und -Speicherung (Carbon-Capture-and-Storage, CCS) zu speichern, um damit der globalen Erwärmung entgegenzuwirken.

Das DAC-Verfahren ist ein sehr energieintensiver Prozess, da die Konzentration von CO₂ in der Umgebungsluft mit ca. 400 ppm sehr gering ist. Voraussetzung für einen effizienten Prozess ist daher ein geeignetes Sorptionsmaterial zu finden, das CO₂ aus der Luft filtert. Mittlerweile gibt es eine Anzahl von Materialien, die zur CO₂ Aufnahme innerhalb einer DAC Anlage befähigt sind, allerdings nehmen die Materialien entweder relativ hohe CO₂-Konzentrationen auf, dann ist die Desorption energieaufwendig, oder die selektive Bindung von CO₂ an den Adsorber ist nicht sehr hoch, dann ist die Effizienz insgesamt niedrig und die Kosten für die CO₂ Verringerung sind hoch. Aus der US 2013/0095996 A1, der US 2017/0239609 A1 und der CN 104607073 B1 sind Adsorptionsmaterialien bekannt. Die aus dem Stand der Technik bekannten Lösungen sind allerdings immer noch nicht zufriedenstellend, da diese beispielsweise hinsichtlich ihrer Alterungsstabilität, Wasseraffinität und/oder ihres Energiebedarfs für die Regeneration des Materials noch ein erhebliches Verbesserungspotenzial aufweise. Ein zu hoher Energiebedarf ist beispielsweise durch eine geringe Wärmeleitfähigkeit des Materials und/oder hohe Desorptionstemperaturen von Wasser und CO₂ bedingt. Bekannt sind klassische Adsorptionsmaterialien, wie beispielsweise Metal Organic Frameworks (MOFs), Zeolithe, aminfunktionalisierte mesoporöse Materialien sowie polymerbasierte Adsorber.

Der Kern einer DAC-Anlage ist das Sorptionsmaterial, das die Aufgabe hat, den Kohlenstoff aus der Umgebungsluft zuerst zu fangen und in einem Vorgang der Adsorption zu binden und danach die gebundene Menge genau und kontrolliert wieder aus dem Adsorptionsmittel freizusetzen (Desorption). Die Desorptionsphase wird eingeleitet, wenn das Sorptionsmaterial mit CO₂ gesättigt ist. Hier wird das CO₂ als konzentrierter Strom aus dem Sorptionsmaterial desorbiert, indem die Temperatur erhöht wird. Oft wird unterstützend auch der Druck reduziert. In DAC-Anlagen werden in der Regel die oben genannten Sorptionsmaterialen als Granulat in einem Festbett eingesetzt und die Temperaturerhöhung in der Regel durch externes thermisches Heizen oder durch Einleiten eines erwärmten Gasstroms erzielt. Beides geht mit einem hohen Energiebedarf einher, was die Effizienz des Prozesses verringert und die Gesamtkosten pro Tonne abgeschiedenem CO₂ erhöht.

Es besteht somit nach wie vor Bedarf an der Bereitstellung und Herstellung von 3D-Kohlenstoff-Strukturen mit Flexibilität in der makroskopischen Strukturierung, sowie deren Verwendung als Sorptionselemente in einer DAC-Anlage. Dabei steht insbesondere die Entwicklung von effizienten Sorptionselementen, bei denen die Adsorption und Desorption von Kohlenstoffdioxid reproduzierbar mit geringerem Energieaufwand abläuft und zum anderen ein vergleichsweise kostengünstiges Anlagenkonzept umgesetzt werden kann, im Vordergrund. Dabei beeinflussen insbesondere die Aufheiz- und Abkühlphasen und auch die Regeneration die Prozesskosten.

Der Erfindung liegt nun die Aufgabe zugrunde, Materialien bereitzustellen, die spezifisch auf die Erfordernisse zugeschnitten sind, welche die industrielle Abscheidung von CO₂ aus der Atmosphärenluft (Umgebungsluft), insbesondere die Direct-Air-Capture-Technologie (DAC-Technologie), stellt und dabei insbesondere hohe Adsorptionskapazität mit ökonomischen Vorteilen zu kombinieren vermag.

Diese Aufgabe ist bei der vorliegenden Erfindung zunächst durch die Merkmale des Patentanspruchs 1 gelöst.

Das erfindungsgemäße Sorptionsmaterial umfasst ein Kohlenstoffmaterial ausgewählt aus Aktivkohle oder Graphit, bevorzugt ist Aktivkohle.

Aktivkohle im Sinne der vorliegenden Anmeldung ist brennbar und besteht überwiegend aus Kohlenstoff, wobei der Kohlenstoffanteil bevorzugt bei wenigstens 90 Gew.-%, insbesondere bei wenigstens 95 Gew.-%, vorzugsweise bei wenigstens 98 Gew.-%, liegt. Die Aktivkohle weist eine poröse Struktur auf, wobei die Poren offenporig und wie bei einem Schwamm untereinander verbunden sind. Die innere Oberfläche beträgt bevorzugt zwischen 300 und 2000 m²/g Kohle. Die Dichte der Aktivkohle liegt bevorzugt im Bereich von 0,2 bis 0,6 g/cm³.

Bevorzugt wird im Zusammenhang mit der vorliegenden Erfindung ein Stoff mit einem Kohlenstoffanteil von wenigstens 90%, einer innen Oberfläche von 300 und 2000 m²/g sowie einer Dichte in einem Bereich von 0,2 bis 0,6 g/cm³ als "Aktivkohle" bezeichnet.

Das erfindungsgemäße Sorptionsmaterial umfasst ferner mindestens eine Komponente ausgewählt aus einem kohlenstoffbasierten Nanomaterial oder einem Bindemittel, enthaltend mindestens ein Alginat.

Ein geeignete kohlenstoffbasiertes Nanomaterial kann ausgewählt sein aus Graphenoxid oder Cellulose-Nanofasern oder deren Mischung. Die Partikelgröße des Nanomaterials kann zwischen 1 nm bis 1000 nm liegen.

Ein geeignetes Alginat kann ausgewählt sein aus Calciumalginat, Natriumalginat, Kaliumalginat oder Ammoniumalginat, bevorzugt ist Natriumalginat.

Das erfindungsgemäße Sorptionsmaterial weist eine Funktionalisierung mit primären oder sekundären Amino-Gruppen auf.

Die obige Aufgabe wird ferner gelöst durch ein Verfahren zur Herstellung des erfindungsgemäßen Sorptionsmaterials.

In dem Verfahren zur Herstellung eines Sorptionsmaterials ist vorgesehen, dass zunächst ein Wasser-basiertes Gel, enthaltend ein Kohlenstoffmaterial ausgewählt aus Aktivkohle oder Graphit und mindestens einer der Komponenten aus einem kohlenstoffbasierten Nanomaterial oder einem Bindemittel, enthaltend mindestens ein Alginat, bereitgestellt wird. Es folgt eine Extrusions- oder Kompressionsformung des Wasser-basierten Gels unter Herstellung einer dreidimensionalen Form. Anschließend wird die dreidimensionalen Form mit einer wässrigen Lösung, enthaltend mindestens ein Salz eines zweiwertigen oder dreiwertigen Kations in Kontakt gebracht unter Ausbildung einer vernetzen dreidimensionalen Form. Im Anschluss an die Vernetzung folgt noch ein Waschschritt der vernetzten dreidimensionalen Form mit destilliertem Wasser. In einem weiteren Schritt erfolgt die Gefriertrocknung der vernetzten dreidimensionalen Form unter Ausbildung eines Kohlenstoff-Kryogels. Abschließend wird das Kohlenstoff-Kryogel mit primären und/oder sekundären Aminen funktionalisiert.

Die hier beschriebenen Aminogruppen-funktionalisierten Sorptionsmaterialien bieten eine effiziente Möglichkeit, eine hohe Adsorptionskapazität mit ökonomischen Vorteilen zu kombinieren. Um die Abscheidung von Kohlenstoffdioxid aus der Luft energetisch effizient zu gestalten, ist es wichtig, dass die Adsorptionsmaterialien so gewählt werden, dass für die Desorption und die dazugehörigen Aufheiz- und Abkühlphase die Energie auf ein Minimum reduziert wird. Das erfindungsgemäße Sorptionsmaterial eignet sich aufgrund des hohen Anteils an Kohlenstoffmaterial, bevorzugt Aktivkohle, für direktes elektrisches Heizen des Materials. Durch Anlegen einer konstanten Spannung bzw. eines konstanten Stroms kann das Material direkt erwärmt werden, ohne dass die Wärme über ein anderes Medium auf das Material übertragen werden muss (Joulesche Erwärmung). Der Einsatz des erfindungsgemäßen Sorptionsmaterials kann somit zu einem großen wirtschaftlichen Vorteil für DAC-Prozesse führen, indem der Energiebedarf für die Desorption erheblich gesenkt wird.

Darüber hinaus kann aufgrund der vergleichsweisen hohen elektrischen und thermischen Leitfähigkeit des Materials ein energieeffizienter Regenerationsprozess ermöglicht werden, da durch die thermische Leitfähigkeit im Vergleich zu keramischen Materialien, wie Zeolithen und Silica, kürzere Aufheiz- und Abkühlphasen umgesetzt werden können. Dies erhöht die Gesamteffizienz des DAC-Prozesses.

Weitere bevorzugte Ausgestaltungen der Erfindung ergeben sich aus den übrigen, in den Unteransprüchen genannten Merkmalen.

In einer bevorzugten Ausführungsform des erfindungsgemäßen Sorptionsmaterials ist das Kohlenstoffmaterial Aktivkohle. Besonders bevorzugt ist die Aktivkohle als im Wesentlichen mikroporöse Aktivkohle ausgebildet.

Eine solche im Wesentlichen mikroporöse Struktur hat sich als besonders gut funktionalisierbar gezeigt und ermöglicht die effiziente Adsorption von CO₂. Insbesondere ist das beschriebene Verfahren geeignet, um Aktivkohle mit im Wesentlichen mikroporöser Struktur zu funktionalisieren.

In einer bevorzugten Ausführungsform enthält das erfindungsgemäße Sorptionsmaterial Aktivkohle und als weitere Komponenten ein kohlenstoffbasiertes Nanomaterial, bevorzugt Graphenoxid, und mindestens ein Alginat als Bindemittel. In einer bevorzugten Ausführungsform ist das Alginat Natriumalginat. In einer besonders bevorzugten Ausführungsform umfasst das erfindungsgemäße Sorptionsmaterial die Komponenten Graphenoxid und Natriumalginat.

Eine vorteilhafte Zusammensetzung des erfindungsgemäßen Sorptionsmaterial umfasst Aktivkohle, Graphenoxid und Natriumalginat.

Durch den Einsatz eines Kohlenstoffmaterials in Mischung mit einem kohlenstoffbasierten Nanomaterial und/oder einem Alginat als Bindemittel als wässrige Dispersion ist die Herstellung einer Wasser-basierten Paste mit scherverdünnenden Eigenschaften möglich, die sich dann durch Extrusions- oder Kompressionsformung zu einer monolithischen Struktur weiterverarbeiten lässt.

Bevorzug weist das erfindungsgemäße Sorptionsmaterial einen Gehalt an Kohlenstoffmaterial von größer gleich 65 Gew.-%, einen Gehalt an Bindemittel kleiner gleich 20 Gew.-% und deinen Gehalt an kohlenstoffbasiertes Nanomaterial kleiner gleich 25 Gew.-%, bezogen auf die Masse des gesamten Sorptionsmaterials, auf.

In einer bevorzugten Ausführungsform liegt der Aktivkohlegehalt zwischen 98 Gew.-% bis 75 Gew.-%, der Alginatgehalt zwischen 1 Gew.-% bis 10 Gew.-% und der Graphenoxidgehalt zwischen 1 Gew.-% bis 15 Gew.-%, bezogen auf die Masse des gesamten Sorptionsmaterials.

Das erfindungsgemäße Sorptionsmaterial verfügt somit über ein Kohlenstoff-Gerüst, wodurch die elektrische und thermische Leitfähigkeit des Materials vergleichsweise hoch ist. Diese Eigenschaften ermöglichen einen energieeffizienten Regenerationsprozess, da durch die thermische Leitfähigkeit im Vergleich zu keramischen Materialien, wie Zeolithen und Silica, kürzere Aufheiz- und Abkühlphasen umgesetzt werden können.

In einer bevorzugten Ausführungsform weist das erfindungsgemäße Sorptionsmaterial eine Funktionalisierung mit primären Amino-Gruppen auf.

Durch die Funktionalisierung mit Amino-Gruppen kann eine hohe Affinität für CO₂ erzielt werden und die Adsorptionskapazität des CO₂ erhöht werden.

In einer vorteilhaften Ausgestaltung des Verfahrens ist vorgesehen, dass die Vernetzung der dreidimensionalen Form mit einer wässrigen Calciumchlorid-Lösung oder Magnesiumchlorid-Lösung erfolgt. Besonders bevorzugt wird eine Calciumchlorid-Lösung eingesetzt.

Durch die Vernetzung kann eine verbesserte Strukturstabilität erzielt werden.

In einer weiteren vorteilhaften Ausgestaltung des Verfahrens zur Herstellung eines Sorptionsmaterials ist vorgesehen, dass bei der Herstellung des Wasser-basierten Gels die Zugabe weiterer Bestandteile ausgewählt aus Adsorptionsmittel, Mittel zur Verbesserung der physikalischen Eigenschaften (wie beispielsweise anorganische Metalloxide-Nanopartikel) oder Katalysatoren sowie deren Mischungen erfolgt.

Durch die Zugabe weiterer Bestandteile kann neben einer weiteren Verbesserung der CO₂-Adsorptionsrate auch eine Verstärkung des Sorptionsmittels erreicht werden, mit der sich die Betriebshaltbarkeit desselben erhöhen lässt. Insbesondere kann damit die Festigkeit und Funktionalität des Sorptionsmaterials gesteigert werden. Das so verstärkte Sorptionsmaterial hat somit neben einer hohen CO₂-Adsorptionskapazität auch eine erhöhte Materialfestigkeit. Diese sind dadurch bei einer zyklischen Prozessbeanspruchung robuster und reproduzierbar, was sich wiederum positiv auf die Qualität und die Prozesskosten auswirkt.

In einer vorteilhaften Ausgestaltung des Verfahrens zur Herstellung eines Sorptionsmaterials ist vorgesehen, dass die Herstellung einer dreidimensionalen Form durch Extrusionsformung, bevorzugt mithilfe eines 3D-Druckers (DIW, Direct Ink Writing) erfolgt.

Durch den 3D-Druck können Gele auf Kohlenstoff-Basis mit kontrollierbarer Makrostruktur bis zu einer Präzision im Submillimeterbereich und dennoch mit hierarchischen porösen Strukturen hergestellt werden, die durch herkömmliche Selbstorganisation nicht erreicht werden können. Der 3D-Druck ermöglicht somit die kontinuierliche Herstellung hochkomplexer physikalischer Strukturen. Bevorzugt ist das direkte Tintenschreiben (DIW), welches eine robuste, kostengünstige und skalierbare 3D-Drucktechnik darstellt. Diese Technik erlaubt die kontinuierliche und robotergestützte Extrusion eines 3D-Produkts. Des Weiteren wird durch den Gel-basierten Druckprozess eine makroskopische Formgebung möglich.

In einer vorteilhaften Ausgestaltung des Verfahrens zur Herstellung eines Sorptionsmaterials ist vorgesehen, dass die Amin-Funktionalisierung der extrudierten dreidimensionalen Form mittels direkter Aminierung mit freiem Ammoniak und/oder mindestens einer Ammoniak freisetzenden Verbindung, durch kovalente Anbindung von Amingruppen-haltigen Verbindungen oder durch physikalische Anbindung von organischen Verbindungen mit Amingruppen erfolgt.

Das erfindungsgemäße Sorptionsmaterial weist bevorzugt eine Monolith-Struktur auf, wie beispielsweise eine Gitterstruktur.

Durch den Einsatz des Sorptionsmaterials als Monolith-Struktur kann die Effizienz des elektrischen Heizens verbessert werden.

Ein weiterer Teilaspekt ist die Verwendung des erfindungsgemäßen Sorptionsmaterials als Sorptionselement in technischen Adsorptionsprozessen, insbesondere zur Adsorption oder Desorption von CO₂, bevorzugt im DAC-Verfahren. Jedoch ist auch eine Verwendung in allen technischen Bereichen möglich, wo beispielsweise eine Gastrennung, Gasseparation, Gasreinigung oder Gasentfeuchtung durchgeführt wird.

Die verschiedenen, in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: ein Ablaufdiagramm zur Durchführung eines beispielhaften erfindungsgemäßen Verfahrens zur Herstellung eines Sorptionsmaterials zur Abtrennung von Kohlenstoffdioxid aus der Umgebungsluft,
- Figur 2: eine Abbildung eines Beispiels für ein erfindungsgemäßes Sorptionsmaterials als 3D-gedruckte Amin-funktionalisierte Aktivkohle Monolithe und
- Figur 3: eine CO₂-Adsorptionsisotherme eines beispielhaft hergestellten erfindungsgemäßen Sorptionsmaterials.

Der Begriff "Suspension" bezeichnet ein heterogenes Stoffgemisch, bei dem eine Stoffkomponente (hier Aktivkohle) als feste Phase in der flüssigen Phase verteilt vorliegt. Synonym zu diesem Begriff wird vorliegend auch der Oberbegriff "Dispersion" verwendet.

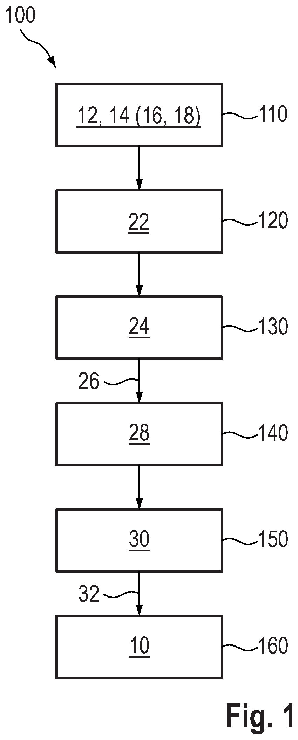

Figur 1 zeigt ein beispielhaftes Ablaufdiagramm zur Durchführung eines erfindungsgemäßen Verfahrens 100 zur Herstellung eines Sorptionsmaterials 10 zur Abtrennung von Kohlenstoffdioxid aus der Umgebungsluft.

In der bevorzugten Ausführungsform, bei welcher ein kohlenstoffbasiertes Nanomaterial 16, bevorzugt Graphenoxid, und mindestens ein Alginat 18, bevorzugt Natriumalginat als Komponenten 14 in Mischung eingesetzt werden, wird ein Wasser-basiertes Gel 22 bereitgestellt.

Dazu wird zunächst in Schritt <110> Graphenoxid 16 zu einer wässrigen Dispersion verarbeitet und Aktivkohle als Kohlenstoffmaterial 12 in Pulverform und Natriumalginat als Alginat 18 in Schritt <120> zu einer homogenen Paste eines Wasser-basierten Gels 22 verrührt. Der Feststoffanteil der Aktivkohle ist bevorzugt >75 Gew-%, bezogen auf die Masse des gesamten Sorptionsmaterials 10. Natriumalginat macht einen Gesamtfeststoffanteil zwischen 1 Gew.% bis 10 Gew.-% aus und der Gesamtfeststoffanteil Graphenoxid liegt zwischen 1 Gew.% bis 15 Gew.%. Beispielhaft beträgt der Feststoffanteil der Aktivkohle 88,7 Gew.%, der Feststoffanteil des Natriumalginats 5 Gew.% und der des Graphenoxids 6,3 Gew.%, bezogen auf die Masse des gesamten Sorptionsmaterials 10.

Eine der am weitesten verbreiteten Methoden für die Synthese von Graphenoxid in großen Mengen für industrielle Zwecke ist die Hummers-Methode (und die modifizierte Hummers-Methode). Zur Gewinnung wird beispielsweise zunächst fein gemahlener Graphit mit hoher Kristallinität in einer stark konzentrierten und oxidierend wirkenden Säure dispergiert. Geeignete Säuren sind beispielsweise Schwefelsäure, Salpetersäure, ortho-Phosphorsäure oder Mischungen dieser. Anschließend wird ein weiteres Oxidationsmittel hinzugefügt, wie beispielsweise KMnO₄, KClO₃, (NH₄)₂S₂O₈ oder NaNO₃. Die reaktive Spezies ist im Falle von Permanganat (Methode nach Hummers) das durch seine Dehydratisierung in-situ gebildete Manganyl-Kation (MnO₃⁺) beziehungsweise Dimanganheptoxid. Gemäß dem Hummers-Verfahren wird eine Graphitprobe chemisch oxidiert, indem sie mit Kaliumpermanganat (KMnO₄) und Natriumnitrat (NaNO₃) und Schwefelsäure (H₂SO₄) in einer vorbestimmten Reihenfolge behandelt wird, und die Probe anschließend einer Zugabe von entionisiertem Wasser ausgesetzt wird, um das Graphenoxid zu bilden.

Es ist außerdem möglich, das Wasser-basierte Gel 22 mit nur einer der beiden Komponenten 14, also einem kohlenstoffbasierten Nanomaterial 16 oder einem Bindemittel 18 herzustellen.

Weiterhin können weitere Komponenten zusätzlich zu den oben genannten Komponenten 14 in das Wasser-basierten Gel 22 gegeben werden. Geeignete Materialien sind beispielsweise solche, die als zusätzliches CO₂-Adsorptionsmittel fungieren können, die die physikalischen Eigenschaften verbessern (z.B. Festigkeit, Leitfähigkeit) oder eine katalytische Aktivität einbringen.

Die Viskosität des Wasser-basierten Gels 22 ist beispielsweise so, dass dieses im 3D-Druck verwendet werden kann. Die Mindestviskosität des Gels 22 kann zwischen 10.000 und 100.000 Pa·s, bevorzugt zwischen 20.000 und 50.000 Pa·s, besonders bevorzugt zwischen 10.000 und 20.000 Pa·s liegen.

Im nächsten Schritt <130> wird das Wasser-basierte Gel 22 in eine makroskopische Form 24 mittels Extrusionsformung gebracht. Die Extrusionsformung wird beispielsweise mithilfe eines 3D-Druckers oder eines Extruders bei Raumtemperatur durchgeführt. Bevorzugt erfolgt die Extrusion mit einem 3D-Drucker, indem das Gel 22 durch eine dünne Düse gedrückt wird. Auf diese Weise können nahezu beliebige Formen eines Sorptionsmaterials 10, wie beispielsweise Gitterstrukturen erzeugt werden. Alternativ ist die Formgebung mittels der Fertigungsverfahren Urformen und/oder Umformen, wie beispielsweise durch Gießen oder Pressen, möglich.

Um die Form 24 zu stabilisieren, werden in Schritt <140> das Alginat und das Graphenoxid, enthaltend in der der gedruckten Struktur 24, mit einer wässrigen Lösung, enthaltend mindestens ein Salz eines zweiwertigen oder dreiwertigen Kations 26, bevorzugt mit einer wässrigen Calciumchlorid-Lösung vernetzt. Danach werden überschüssige Calciumionen und Chloridionen mit destilliertem Wasser herausgewaschen.

Anschließend wird in Schritt <150> die Struktur 28 eingefroren und gefriergetrocknet, um das Wasser aus der Struktur 28 zu entfernen unter Erhalt der Porosität. Es wird ein poröses Kohlenstoff-Kryogel 30 in einer monolithischen Form erhalten.

Das poröse Kryogel 30 in Monolith-Struktur wird anschließend im Schritt <160> mit primären und/oder sekundären Aminogruppen funktionalisiert, um die CO₂-Affinität des Sorptionsmaterials 10 zu erhöhen. Dies kann durch direkte Aminierung, beispielsweise mit Ammoniak oder Hydroxylamin, durch kovalente Anbindung von Aminosilanen oder anderen organischen Verbindungen mit Aminogruppen erfolgen oder durch physikalische Anbindung (Imprägnierung) von organischen Verbindungen mit Aminogruppen, wie beispielsweise Polyethylenimin, Diethylentriamin.

Verbindungen für eine kovalente Funktionalisierung sind beispielsweise Aminosilane, bevorzugt sind 3-Aminopropyltrimethoxysilan, 3-Aminopropyltriethoxysilan, 3-Aminopropyldiethoxymethylsilan, N-(2-Aminoethyl)-3-aminopropyltrimethoxysilane oder 3-[2-(2-Aminoethylamino)-ethylamino]-propyltrimethoxysilan.

Beispielhaft ist das poröse Kryogel 30 in Monolith-Struktur mit dem Aminosilan 3-Aminopropyltriethoxysilan funktionalisiert worden.

Eine nicht-kovalente Funktionalisierung ist beispielsweise mit Alkylaminen über Wasserstoffbrückenbindungen zwischen Hydroxylgruppen und Amingruppen oder über elektrostatische Anziehung von negativ geladenen Schwefelsäureestern mit den positiv geladenen Alkylammonium-Ionen möglich, sowie mit oberflächenwirksamen Tensiden wie beispielsweise Natriumdodecylsulfat oder Natriumdodecylbenzolsulfonat. Bevorzugt handelt es sich bei der nicht-kovalenten Funktionalisierung um eine physikalische Anbindung (Imprägnierung) mit organischen Amingruppen aufweisende Verbindungen.

Beispiele für organische Amine, die für eine Imprägnierung verwendet werden können, sind Alkylamine, Arylamine, heterocyclische Amine, polymere Amine oder Spirotetramine. In spezifischen Ausführungsformen ist das Amin ausgewählt aus der Gruppe bestehend aus Ethylendiamin, Diethylentriamin, Triethylamin, Triethylentetramin Tetraethylenpentamin, Pentaethylenhexamin, Diisopropylethylamin, Piperazin oder Polyethylenimin sowie deren Kombinationen.

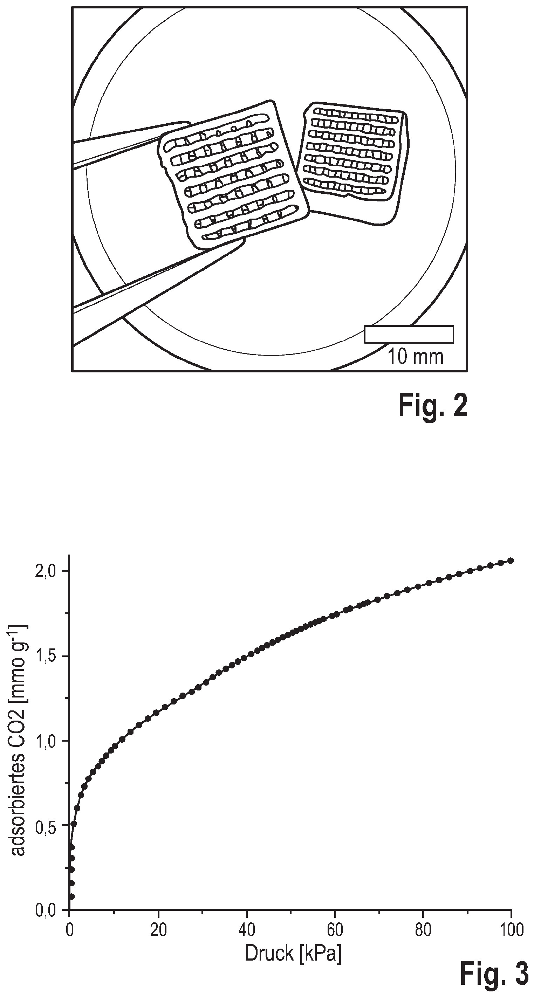

Die Figur 2 zeigt ein Foto eines gedruckten Monolithen mit einer erfindungsgemäßen Zusammensetzung. Wie aus Figur 2 ersichtlich ist, kann das erfindungsgemäße Sorptionsmaterial 10 als Sorptionselement für CO₂ dienen. Die CO₂-Quelle kann hierbei Umgebungsluft oder ein CO₂-Strom mit höherer CO₂-Konzentration sein.

In Figur 3 wird eine CO₂-Adsorptionsisotherme des beispielhaft beschriebenen Sorptionsmaterials 10 bei 5°C gezeigt.

### Bezugszeichenliste

- 10: Sorptionsmaterial
- 12: Kohlenstoffmaterial
- 14: Komponente
- 16: kohlenstoffbasiertes Nanomaterial
- 18: Bindemittel
- 22: Wasser-basiertes Gel
- 24: dreidimensionale Form
- 26: wässrige Lösung eines zweiwertigen oder dreiwertigen Kations
- 28: vernetzte dreidimensionale Form
- 30: Kohlenstoff-Kryogel
- 32: primäre und/oder sekundäre Amine

## Patentansprüche

1. Sorptionsmaterial (10) umfassend
- ein Kohlenstoffmaterial (12) ausgewählt aus Aktivkohle oder Graphit, und
- mindestens eine Komponente (14) ausgewählt aus einem kohlenstoffbasierten Nanomaterial (16) oder einem Bindemittel (18), enthaltend mindestens ein Alginat,
**dadurch gekennzeichnet, dass** das Sorptionsmaterial (10) eine Funktionalisierung mit primären oder sekundären Amino-Gruppen aufweist.

2. Sorptionsmaterial (10) nach Anspruch 1, wobei das Kohlenstoffmaterial (12) Aktivkohle ist, bevorzugt die Aktivkohle als im Wesentlichen mikroporöse Aktivkohle ausgebildet ist.

3. Sorptionsmaterial (10) nach Anspruch 1 oder 2, wobei das kohlenstoffbasierte Nanomaterial (16) ausgewählt ist aus Graphenoxid oder Cellulose-Nanofasern oder deren Mischung.

4. Sorptionsmaterial (10) nach einem oder mehreren der Ansprüche 1 bis 3, wobei die Komponente (14) ein kohlenstoffbasiertes Nanomaterial (16), bevorzugt Graphenoxid, und mindestens ein Alginat als Bindemittel (18) umfasst.

5. Sorptionsmaterial (10) nach Anspruch 4, wobei das Sorptionsmaterial (10) einen Gehalt an Kohlenstoffmaterial (12) von größer gleich 65 Gew.-%, einen Gehalt an Bindemittel (18) kleiner gleich 20 Gew.-% und einen Gehalt an kohlenstoffbasiertem Nanomaterial (16) kleiner gleich 25 Gew.-%, bezogen auf die Masse des gesamten Sorptionsmaterials (10) aufweist.

6. Verfahren zur Herstellung eines Sorptionsmaterials (10), umfassend:
(I) Bereitstellen eines Wasser-basierten Gels (22) enthaltend ein Kohlenstoffmaterial (12) ausgewählt aus Aktivkohle oder Graphit und mindestens einer der Komponenten (14) aus einem kohlenstoffbasierten Nanomaterial (16) oder einem Bindemittel (18), enthaltend mindestens ein Alginat,
(II) Herstellen einer dreidimensionalen Form (24) durch Extrusions- oder Kompressionsformung des Wasser-basierten Gels (22),
(III) Inkontaktbringen der dreidimensionalen Form (24) mit einer wässrigen Lösung, enthaltend mindestens ein Salz eines zweiwertigen oder dreiwertigen Kations (26) unter Ausbildung einer vernetzen dreidimensionalen Form (28) und anschließendem Waschen mit destilliertem Wasser,
(V) Gefriertrocknen der vernetzten dreidimensionalen Form (28) unter Ausbildung eines Kohlenstoff-Kryogels (30), und
(VI) Funktionalisieren des Kohlenstoff-Kryogels (30) durch Amin-Funktionalisierung mit primären und/oder sekundären Aminen (32).

7. Verfahren nach Anspruch 6, wobei das Herstellen einer dreidimensionalen Form (24) durch Extrusionsformung, bevorzugt mithilfe eines 3D-Druckers erfolgt.

8. Verfahren nach Anspruch 6 oder 7, wobei das Amin-Funktionalisieren durch direkte Aminierung mit freiem Ammoniak und/oder mindestens einer Ammoniak freisetzenden Verbindung, durch kovalente Anbindung von Amingruppen-haltigen Verbindungen oder durch physikalische Anbindung von organischen Verbindungen mit Amingruppen erfolgt.

9. Verfahren gemäß einem oder mehreren der Ansprüche 6 bis 8, wobei bei dem Herstellen des Wasser-basierten Gels (22) die Zugabe weiterer Bestandteile (32) ausgewählt aus Adsorptionsmittel, Mittel zur Verbesserung der physikalischen Eigenschaften oder Katalysatoren sowie deren Mischungen erfolgt.

10. Verwendung des Sorptionsmaterials (10) gemäß einem der Ansprüche 1 bis 5 als Sorptionselement zur Adsorption oder Desorption von CO₂.

11. Verwendung des Sorptionsmaterials (10) gemäß Anspruch 10, wobei das Sorptionselement in einer Direct-Air-Capture (DAC)-Anlage verbaut ist.
